# EUROPÄISCHE PATENTSCHRIFT

(11) **EP 1 665 199 B1**
(45) Veröffentlichungstag und Bekanntmachung des Hinweises auf die Patenterteilung: **08.10.2008**
(21) Anmeldenummer: 04733784.5
(22) Anmeldetag: 19.05.2004
(51) Int. Cl.: G09F 3/02, G06K 19/10, A63F 3/06, B42D 15/00

(54) **VERFAHREN ZUR AUTHENTIFIZIERUNG EINES PRODUKTS**
PRODUCT AUTHENTICATION METHOD
PROCEDE POUR AUTHENTIFIER UN PRODUIT

(30) Priorität: 16.09.2003 DE 10343064
(43) Veröffentlichungstag der Anmeldung: 07.06.2006
(73) Patentinhaber: SATA GmbH & Co. KG, 70806 Kornwestheim (DE)
(72) Erfinder: KRUSE, Albrecht, 70193 Stuttgart (DE)
(74) Vertreter: Rapp, Bertram
(86) Internationale Anmeldenummer: PCT/EP2004/005381
(87) Internationale Veröffentlichungsnummer: WO 2005/036504

(56) Entgegenhaltungen:
- EP-A- 1 081 639
- WO-A-01/99062
- US-A- 5 367 148
- US-B1- 6 308 991
- US-B1- 6 442 276

## Beschreibung

Die Erfindung betrifft ein Verfahren zur Authentifizierung eines einzelnen Produkts eines Herstellers durch einen Dritten nach dem Oberbegriff des Anspruchs 1.

Für die Hersteller von Markenprodukten und die Beteiligten des Vertriebs, also Importeure und Exporteure, Groß- und Einzelhändler und die Endkunden besteht ein Bedürfnis, einzelne Produkte einer Serie von Markenprodukten zu identifizieren und zu authentifizieren. Die Hersteller wollen auf diesem Wege den genauen Vertriebsweg und die Zeitpunkte des jeweiligen Abverkaufs der einzelnen Produkte in den verschiedenen Vertriebsstufen nachvollziehen können um z. B. sicherzustellen, dass Produkte für ein bestimmtes Land auch nur in diesem Land verkauft werden. Die Händler und Endkunden (und auch die Hersteller) wollen feststellen, ob es sich bei einem bestimmten Produkt um ein Originalprodukt des Markenherstellers oder um eine Fälschung, also ein Plagiat, handelt.

Aus diesem Grunde gibt es eine Reihe von Methoden zur Authentifizierung von Produkten auf dem Vertriebsweg, bei denen in der Regel zunächst ein Code erstellt wird, wie es beispielsweise in der WO 03/007252 A1 beschrieben ist. Dieser Code ist ein relativ fälschungssicherer Zufallscode, der für jedes einzelne Produkt einmalig vergeben wird, also geeignet ist, ein Einzelprodukt in einer Serie von Produkten zu identifizieren. Dieser Code wird auf das Produkt selbst oder auf seine Verpackung aufgebracht, z. B. auf ein Etikett aufgedruckt, wobei das Etikett dann auf die Verpackung aufgeklebt wird. Gleichzeitig gibt der Hersteller diesen Code in eine Datenbank ein, welche eine Liste aller vergebenen und damit zulässigen Codes enthält. Diese Datenbank ist öffentlich, insbesondere auf dem Internet zugänglich, so dass die Beteiligten der Vertriebsstufe im Wege einer Abfrage darauf zugreifen können. Das Produkt kommt anschließend in den Handel. Sobald ein Beteiligter des Vertriebs, z. B. ein Händler oder ein Endkunde das Produkt besitzt kann dieser den aufgedruckten Code nach Aufrufen der Datenbank im Internet eingeben und erhält eine Rückmeldung dahingehend, ob der Code in der Datenbank enthalten ist, also mit einem gespeicherten Code identisch ist und/oder ob der Code bereits vorher einmal abgefragt worden ist. Aus dieser Rückmeldung kann der Händler bzw. Endverbraucher Rückschlüsse über die Authentizität des Produkts ziehen. Ergibt die Datenbankauskunft, dass die eingegebene Nummer nicht in der Datenbank enthalten ist, handelt es sich offensichtlich nicht um ein Originalprodukt, sondern um ein Plagiat. Ergibt die Abfrage, dass der Code zwar in der Datenbank existiert, aber von einem Dritten schon einmal abgerufen wurde (die Datenbank ist in der Lage diese Abfragen zu speichern), ergibt sich hieraus kein zuverlässiger Rückschluss, ob es sich um ein Original oder um ein Plagiat handelt, da entweder ein vorangeschalteter Händler die Nummer abgerufen haben könnte oder die Nummer von einem Fälscher einfach mitkopiert worden sein könnte. Ergibt die Abfrage schließlich, dass die Nummer in der Datenbank zwar existiert, aber noch nicht abgerufen wurde spricht dies zunächst für ein Originalprodukt; jedoch kann sich der Abfragende auch hier nicht sicher sein, da das Produkt mitsamt der Nummer kopiert worden sein könnte, er das Plagiat in Händen hält und die Nummer des Originals nur noch nicht abgerufen wurde.

Hier hilft dem Fachmann auch nicht die Tatsache, dass es beispielsweise aus der DE 199 41 362 A1 bekannt ist, einen Datenträger mit einer den darauf angebrachten Code verbergenden Abdeckung zu versehen, um diesen Code (nach Entfernen der Abdeckung, z. B. einer Rubbelschicht) nur dem berechtigten Benutzer zu offenbaren. In dieser Schrift ist lediglich ein Datenträger mit einer entfernbaren Abdeckung, z. B. zum Verbergen von Pin-Codes durch unberechtigte Dritte beschrieben.

Die DE 199 45 760 A1 hat ein Prüfsystem zum Prüfen eines Gegenstandes auf seine Herkunft aus einer angenommenen Herkunftsquelle zum Gegenstand, wobei der Gegenstand mit mindestens einer von einem Erkenner erkennbaren Markierung versehen ist und die vom Erkenner erkannte Markierung mit die Herkunftsquelle individualisierenden Merkmalen vergleichbar ist. Auch dieses Prüfsystem ist nicht fälschungssicher und bleibt hinter dem oben (unter Bezugnahme auf die WO 03/007252 A1) beschriebenen Verfahren zurück.

Gegenstand der US 6,442,276 ist ein Verfahren zur Authentifizierung eines einzelnen Produkts eines Herstellers durch einen Dritten, wobei mindestens ein für das einzelne Produkt spezifischer erster Code erstellt und von dem Hersteller auf das Produkt oder seine Verpackung aufgebracht wird, der erste Code von dem Hersteller in einer öffentlich zugänglichen Datenbank gespeichert wird, der erste Code von dem Dritten abgelesen und in die Datenbank eingegeben wird, und auf Grund eines Vergleichs des eingegebenen ersten Codes mit dem in der Datenbank gespeicherten ersten Codes aller Produkte die Datenbank eine Ausgabe dahingehend erzeugt, ob der erste Code mit einem gespeicherten ersten Code identisch ist und/oder ob der erste Code vorher bereits abgefragt worden ist. Allerdings muss bei diesem Verfahren ein Verschluss aufgebrochen und die Verpackung geöffnet werden, um den ersten Code und eventuelle weitere Codes ablesen zu können. Hierdurch soll der Vorteil erzielt werden, dass die Zerstörung der Packung den Wert des zu schützenden Produkts senkt und ein Fälscher durch die massenhafte Zerstörung der Verpackungen kein Interesse haben wird, auf diese Weise an Originalcodes zu gelangen. Die WO 01/99062 A1 offenbart eine Telefonkarte, wie sie beispielsweise zum Aufladen des Kontostandes von Mobiltelefonen verwendet wird. Der hierzu in das Mobiltelefon einzugebende Code ist bei dieser Karte zweimal aufgedruckt, und zwar einmal auf der Forderseite und einmal auf der Rückseite. Es wird also die gleiche Nummer noch einmal angebracht, wobei der Nutzer nur ein Rubbelfeld entfernt und die Nummer dann eingibt und die andere Nummer zu Kontrollzwecken dient. Die Verwendung zweier verschiedener Codes ist in dieser Druckschrift nicht beschrieben.

Damit bieten die bestehenden Möglichkeiten zwar dem Markenhersteller einen gewissen Überblick über den Vertriebsweg, sofern die daran Beteiligten die Nummern bzw. Codes regelmäßig abfragen. Die Systeme bieten jedoch keine ausreichend sichere Möglichkeit, für die Beteiligten des Vertriebswegs, festzustellen, ob sie Originalprodukte oder Plagiate besitzen.

Es besteht daher die Aufgabe, ein Verfahren zur Authentifizierung so weiterzubilden, dass mit ausreichender Sicherheit Originale von Plagiaten unterschieden werden können. Gelöst wird diese Aufgabe mit den Merkmalen des Anspruchs 1. Eine vorteilhafte Ausgestaltungen ist dem Anspruch 2 entnehmbar.

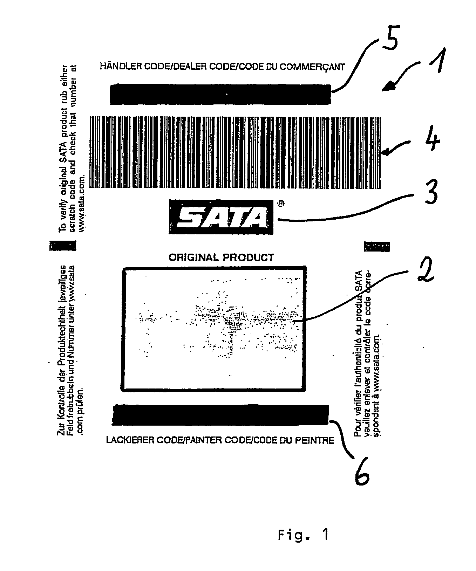

Ein Ausführungsbeispiel der Erfindung wird im Folgenden unter Bezugnahme auf die Zeichnung näher erläutert. Diese zeigt ein erfindungsgemäßes Etikett.

Das erfindungsgemäße Verfahren baut auf einem Verfahren auf, wie es in der Beschreibungseinleitung beschrieben ist.

Der Markenhersteller erzeugt, beispielsweise durch einen Rechenalgorithmus auf einem Computer, einen das einzelne Produkt einer Serie spezifizierenden Code. Dieser Code besteht beispielsweise aus einer Zahlen- und/oder Buchstabenfolge oder aus anderen sichtbaren und der Datenverarbeitung zugänglichen Zeichen. Der Code ist ausreichend lang und komplex, um sicherzustellen, dass er nur mit ausreichend geringer Wahrscheinlichkeit zufällig von einem Dritten benutzt wird. Dieser Code wird von dem Markenhersteller auf das Produkt selbst, in den meisten Fällen jedoch auf seine Verpackung aufgebracht, was zweckmäßig dadurch erfolgt, dass der Code, ggf. mit weiteren Informationen, auf ein Etikett aufgebracht wird, wie es die Figur zeigt. Dieses Etikett wird anschließend auf die Verpackung aufgeklebt, beispielsweise auf die Front- oder Oberseite der Verpackung, oder vorzugsweise über eine Kante der Verpackung, so dass das Etikett beim Öffnen der Verpackung zerstört wird.

Das gesamte Etikett 1 ist in der Figur dargestellt. Es enthält ein Hologrammfeld 2 zur zusätzlichen Warensicherung, den Namen 3 des Markenherstellers und einen, ebenfalls zur Produktidentifizierung dienenden und mit einem Scanner lesbaren Barcode 4. Darüber hinaus enthält das Etikett 1 zwei (abgedeckte) Codes 5 und 6, wobei der Code 5 ein Händlercode ist und der Code 6 ein Endkundencode. Da das Produkt im dargestellten Ausführungsbeispiel eine Lackierpistole ist, ist der Endkunde ein Lackierer und der Code 6 ist der Lackierercode.

Nachfolgend wird der Händlercode 5 als erster Code und der Lackierercode 6 als zweiter Code bezeichnet.

Wie bereits nach dem Stand der Technik üblich führt der Markenhersteller eine öffentlich zugängliche, beispielsweise im Internet abrufbare, Datenbank für jedes einzelne Markenprodukt, welches sämtliche vergebenen Codes enthält, und zwar sowohl die ersten als auch die zweiten Codes. Ferner ist die Datenbank in der Lage, bei einem Abruf der Codes eine Marke zu setzen, die angibt, ob der Code bereits einmal abgerufen wurde. Auch diese Information kann bei einem erneuten Abrufen der Datenbank ausgegeben werden. Die Datenbank ist in an sich bekannter Weise gegen "Hacker" geschützt, z.B. durch einen Zugriffscode.

Beide Codes 5 und 6 sind, wie in der Figur dargestellt, nicht lesbar, sondern mit einer entfernbaren, die beiden Codes 5 und 6 verbergenden Abdeckung abgedeckt. Bei dieser Abdeckung handelt es sich beispielsweise um ein an sich bekanntes Rubbelfeld, also eine Kunststoff- bzw. Kautschukmasse, welche die darunter liegenden Codes 5 bzw. 6 vollständig abdeckt, jedoch mit der Hand oder einem Gegenstand abgerubbelt werden kann, worauf dann erst die Codes 5 und 6 sichtbar werden. Die Rubbelmasse wird dabei entfernt und kann nicht ohne weiteres wieder hergestellt werden.

Das Markenprodukt verlässt den Herstellerbetrieb mit abgedeckten Codes 5 und 6, so dass diese nicht lesbar sind.

Ist das Produkt im Handel und beispielsweise bei einem Händler, ist dieser berechtigt, den ersten Code (Händlercode) 5 freizulegen und kann anschließend den Code 5 in an sich bekannter Weise in die öffentlich zugängliche Datenbank eingeben. Daraufhin erhält der Händler wiederum drei mögliche Rückmeldungen der Datenbank:
- **Der von Ihnen eingegebene Code wurde nicht für ein Original-Produkt vergeben. Sofern Sie den Code richtig eingegeben haben, müssen Sie davon ausgehen, dass es sich um ein gefälschtes Produkt handelt.**
   Dieser Fall entspricht dem im Stand der Technik abgehandelten Fall und unterscheidet sich hiervon nicht. Der Code ist in der Liste der Original-Codes nicht enthalten und wurde von einem Fälscher selbst und ohne Kenntnis der Original-Codes erstellt. Das Resultat, dass es sich um eine Fälschung handelt, ist eindeutig.
- **Der von Ihnen eingegebene Code wurde für ein Original-Produkt vergeben, jedoch bereits mindestens einmal zur Authentifizierung verwendet. War das Code-Feld bereits freigerubbelt, besteht die Möglichkeit, dass es sich um ein Original-Produkt handelt. Bitte prüfen Sie in diesem Falle den zweiten Authentifizierungscode. Haben Sie den Code selbst freigerubbelt, müssen Sie davon ausgehen, dass es sich um ein gefälschtes Produkt handelt.**
   In diesem Fall ist mit größter Wahrscheinlichkeit von einer Fälschung auszugehen. Es kann zwar nicht ganz ausgeschlossen werden, dass es sich um ein Original handelt, wenn die gefälschte Nummer zuerst von einem Dritten abgerufen wurde. Dies ist jedoch sehr unwahrscheinlich, da die Originalnummer jeweils nur einmal existiert, jedoch identische, gefälschte Nummern häufig existieren werden.
- **Der von Ihnen eingegebene Authentifizierungscode wurde für ein Original-Produkt vergeben. Es handelt sich mit größter Wahrscheinlichkeit um ein Original-Produkt.**
   In diesem Fall wurde der Code freigerubbelt und noch nicht abgefragt, so dass mit allergrößter Wahrscheinlichkeit von einem Original-Produkt auszugehen ist. Nur in dem einen unwahrscheinlichen Fall, dass es sich um das erste, im Markt befindliche Plagiat handelt und das Original auch noch nicht abgerufen wurde, entsteht eine Falschaussage.

Zwischen dem ersten und dem zweiten Code 6 besteht darüber hinaus dahingehend eine Wechselwirkung, dass im zweiten, oben angegebenen Fall, wenn also der Originalcode bereits einmal abgerufen wurde, der Händler die Möglichkeit hat, auch auf den zweiten, eigentlich für den Lackierer bestimmten Code zuzugreifen und sich damit letzte Sicherheit zu verschaffen. Sollte der Händler die Möglichkeit der Abfrage nicht genutzt haben, so kann der Endkunde beide Codes zur Verifizierung benutzen.

Die Authentifizierung durch den Endkunden bzw. Lackierer über den zweiten Code 6 erfolgt in analoger Weise.

Im Vergleich mit den bekannten Verfahren bietet das erfindungsgemäße Verfahren damit eine nahezu fehlerfreie Authentifizierungsmöglichkeit für ein einzelnes Produkt einer Serie.

## Patentansprüche

1. Verfahren zur Authentifizierung eines einzelnen Produkts eines Herstellers durch einen Dritten, wobei mindestens ein für das einzelne Produkt spezifischer erster Code erstellt und von dem Hersteller auf das Produkt oder seine Verpackung aufgebracht wird, der erste Code von dem Hersteller in einer öffentlich zugänglichen Datenbank gespeichert wird, der erste Code von dem Dritten abgelesen und in die Datenbank eingegeben wird, und aufgrund eines Vergleichs des eingegebenen ersten Codes mit den in der Datenbank gespeicherten ersten Codes aller Produkte die Datenbank eine Ausgabe dahingehend erzeugt, ob der erste Code mit einem gespeicherten ersten Code identisch ist und/oder ob der erste Code vorher bereits abgefragt worden ist und der erste Code nach dem Aufbringen mit einer entfernbaren, den Code verbergenden Abdeckung versehen wird, welche von dem Dritten entfernt wird, bevor er den ersten Code abliest und eingibt und der erste Code der Authentifizierung des Produktes durch eine bestimmte Vertriebsstufe dient, **dadurch gekennzeichnet, dass** mindestens ein für das einzelne Produkt spezifischer weiterer Code zur Authentifizierung des Produktes durch mindestens eine weitere Vertriebsstufe erstellt und von dem Hersteller auf das Produkt oder seine Verpackung aufgebracht wird, der weitere Code von dem Hersteller in einer öffentlich zugänglichen Datenbank gespeichert wird, der weitere Code von einem weiteren Dritten abgelesen und in die Datenbank eingegeben wird, und aufgrund eines Vergleichs des eingegebenen weiteren Codes mit den in der Datenbank gespeicherten weiteren Codes aller Produkte die Datenbank eine Ausgabe dahingehend erzeugt, ob der weitere Code mit einem gespeicherten weiteren Code identisch ist und/oder ob der weitere Code vorher bereits abgefragt worden ist, wobei der weitere Code nach dem Aufbringen mit einer entfernbaren, den Code verbergenden Abdeckung versehen wird, welche von dem weiteren Dritten entfernt wird, bevor er den weiteren Code abliest und eingibt.

2. Verfahren nach Anspruch 1, **dadurch gekennzeichnet, dass** die Abeckung eine Rubbelschicht ist.

## Claims

1. Method for authentication of an individual product of a manufacturer by a third party, wherein at least one first code specific to the individual product is created and applied by the manufacturer to the product or its packaging, the first code is stored by the manufacturer in a publicly accessible database, the first code is read by the third party and entered in the database, and on the basis of a comparison of the entered first code with the first codes stored in the database for all the products the database produces an output indicating whether the first code is identical to a stored first code and/or whether the first code has already been called up previously, and the first code after application is provided with a removable covering concealing the code which is removed by the third party before he reads and enters the first code and the first code serves for authentication of the product by a certain sales level, **characterised in that** at least one further code specific to the individual product is created for authentication of the product by at least one further sales level and is applied by the manufacturer to the product or its packaging, the further code is stored by the manufacturer in a publicly accessible database, the further code is read by a further third party and entered in the database, and on the basis of a comparison of the entered further code with the further codes stored in the database for all the products the database produces an output indicating whether the further code is identical to a stored further code and/or whether the further code has already been called up previously, the further code after application being provided with a removable covering concealing the code which is removed by the further third party before he reads and enters the further code.

2. Method according to claim 1, **characterised in that** the covering is a scratch-off coating.

## Revendications

1. Procédé pour permettre à un tiers d'authentifier un produit individuel d'un fabricant, sachant qu'au moins un premier code spécifique du produit individuel est élaboré et apposé par le fabricant sur le produit ou sur son emballage, que le premier code est mémorisé par le fabricant dans une banque de données d'accès public, que le premier code est lu par le tiers et entré dans la banque de données et, sur la base d'une comparaison du premier code entré avec les premiers codes de tous les produits mémorisés dans la banque de données, la banque de données produit une édition indiquant si le premier code est identique à un premier code mémorisé et/ou si le premier code a déjà été précédemment consulté, et sachant que le premier code, après avoir été apposé, est pourvu d'un recouvrement ou cache pouvant être retiré, qui cache le code et qui est retiré par le tiers avant de lire et d'entrer le premier code, et sachant que le premier code sert à l'authentification du produit par un niveau donné de distribution, **caractérisé en ce qu'**au moins un code supplémentaire, spécifique du produit individuel et destiné à l'authentification du produit par au moins un autre niveau de distribution, est élaboré et apposé par le fabricant sur le produit ou sur son emballage, **en ce que** le code supplémentaire est mémorisé par le fabricant dans une banque de données d'accès public, et **en ce que** le code supplémentaire est lu par un autre tiers et entré dans la banque de données et, sur la base d'une comparaison du code supplémentaire entré avec les codes supplémentaires de tous les produits mémorisés dans la banque de données, la banque de données produit une édition indiquant si le code supplémentaire est identique à un code supplémentaire mémorisé et/ou si le code supplémentaire a déjà été précédemment consulté, sachant que le code supplémentaire, après avoir été apposé, est pourvu d'un recouvrement ou cache pouvant être retiré, qui cache le code et qui est retiré par l'autre tiers avant de lire et d'entrer le code supplémentaire.

2. Procédé selon la revendication 1, **caractérisé en ce que** le recouvrement ou cache est une couche à gratter.
